# EUROPEAN PATENT APPLICATION

(11) **EP 3 955 196 A1**
(43) Date of publication of application: **16.02.2022**
(21) Application number: 21184273.7
(22) Date of filing: 07.07.2021
(51) Int. Cl.: G06Q 20/20, G07G 1/00, G07G 1/14

(54) **IMAGE RECOGNITION DEVICE, CONTROL PROGRAM FOR IMAGE RECOGNITION DEVICE, AND IMAGE RECOGNITION METHOD**

(30) Priority: 12.08.2020 JP 2020136189
(71) Applicant: Toshiba TEC Kabushiki Kaisha, Tokyo 141-8562 (JP)
(72) Inventor: Kobayashi, Tohru, Tokyo 141-8562 (JP)
(74) Representative: Bandpay & Greuter

(57) **Abstract**

In an embodiment, an image recognition device includes a first communication interface that is configured to connect to a server device and a second communication interface configured to connect to a point-of-sale terminal. A first recognition unit of the image recognition device is configured to receive a captured image of a commodity and use a first learning model to recognize the commodity in the captured image by deep learning. A second recognition unit of the image recognition device is configured to receive the captured image of the commodity and use a second learning model to recognize the commodity in the captured image by deep learning. A processor of the image recognition device is configured to identify the commodity in the captured image according to recognition results from both the first recognition unit and the second recognition unit.

## Description

### FIELD

Embodiments described herein relate generally to an image recognition device, a control program for an image recognition device, and an image recognition method.

### BACKGROUND

Techniques of recognizing an item in a camera image using deep learning based on a convolutional neural network are already known. An image recognition device using these techniques have been developed and used to automatically recognize products to which no barcode has been attached, such as fresh food or fruit. This type of image recognition device inputs a captured image of an item to be recognized into a learning model to recognize other instances of the item. The learning model is a machine learning model. The learning model is generated by a computer with an AI (artificial intelligence) function for extracting feature data from large amounts of captured image data of each of various possible items for forming a recognition model based on the feature data.

In the context of retail product recognition, it should be noted that apples are sold nationwide and come in different varieties. Some varieties of apples are sold nationwide, whereas some varieties of applies are sold only in a particular area. Also, many of these varieties of apples have only a small difference in feature data when shown in a captured image. Therefore, in image recognition of an apple using a learning model having data about different varieties of apples, it may be hard to determine the variety of an apple that is sold only in a particular area rather than nationwide.

### BRIEF DESCRIPTION OF THE DRAWINGS

FIG. 1 is a block diagram schematically showing the configuration of an image recognition system including an image recognition device according to an embodiment.
FIG. 2 is a block diagram of a center server.
FIG. 3 is a block diagram of an edge server.
FIG. 4 is a block diagram of an image recognition device.
FIG. 5 is a block diagram of a POS terminal.
FIG. 6 is a sequence chart depicting data signals transferred between a center server, an edge server, and an image recognition device.
FIG. 7 is a flowchart of image recognition processing executed by a processor of an image recognition device.
FIG. 8 is a flowchart of processing executed by a processor of an edge server.
FIG. 9 is a flowchart of processing executed by a processor of a center server.

### DETAILED DESCRIPTION

An embodiment described herein provides an image recognition device that can accurately recognize commodities having only small differences in feature data when shown in a captured image, such as different varieties of fruit, vegetables, and the like.

In general, according to one embodiment, an image recognition device includes a first communication interface configured to connect to a server device and a second communication interface configured to connect to a point-of-sale terminal. A first recognition unit is configured to receive a captured image of a commodity and use a first learning model to recognize the commodity in the captured image by deep learning. A second recognition unit is configured to receive the captured image of the commodity and use a second learning model to recognize the commodity in the captured image by deep learning. A processor is configured to identify the commodity in the captured image according to recognition results from the first recognition unit and the second recognition unit.

Preferably, the processor is configured to apply a weighting factor to the recognition result from the first recognition unit which is different from a weighting factor to the recognition result from the second recognition unit to identify the commodity, and the recognition result from the second recognition unit is weighted more heavily than the recognition result from the first recognition unit.

Preferably, the processor is further configured to: output information, via the second communication interface, indicating the identification of the commodity to the point-of-sale terminal; and receive, via the second communication interface, an indication from the point-of-sale terminal indicating whether the identification of the commodity was correct or not.

Preferably, the processor is further configured to: determine whether the commodity was correctly identified or not based on the indication from the point-of-sale terminal received via the second communication interface.

Preferably, the processor is further configured to transmit training data to the server via the first communication interface, the training data including the captured image and a correct answer label attached to a correctly identified commodity.

Preferably, the first learning model is based on data from a plurality of image recognition devices, and the second learning model is based on data from a subset of the plurality of image recognition devices.

Preferably, the image recognition device further comprises an accelerator, which is a computational processing unit for recognizing images by artificial intelligence (AI)-based deep learning, wherein the first recognition unit comprises the processor and the accelerator, and the second recognition unit also comprises the processor and the accelerator.

There is also provided a product recognition system for retail chain stores, the product recognition system comprising: a central server; a plurality of edge servers connected to the central server by a first communication network, each edge server being respectively connected to a plurality of image recognition devices by a second communication network; and a plurality of point-of-sale terminals, each point-of-sale terminal being respectively connected to the image recognition device as described above.

Preferably, the center server manages the first learning model, and each edge server manages a separate version of the second learning model.

There is also provided a non-transitory computer-readable storage device storing program instruction which when executed by an image recognition device including an interface that acquires a captured image of a commodity for purchase causes the image recognition device to perform an image recognition method comprising: acquiring an image of a commodity via the interface; recognizing the commodity in the image by deep learning using a first learning model; recognizing the commodity in the image by deep learning using a second learning model; and identifying the commodity in the image according to recognition results by the first learning model and the second learning model.

Preferably, the recognition result by the second learning model is weighted more heavily than the recognition result by the first learning model.

Preferably, the first learning model is based on data from a plurality of image recognition devices, and the second learning model is based on data from a subset of the plurality of image recognition devices.

Certain example embodiments will now be described with reference to the drawings.

An example embodiment relates to an image recognition device used to recognize a commodity (e.g., a retail product) having no barcode attached thereto, such as fresh food or fruit, at stores of a nationwide retail chain or the like.

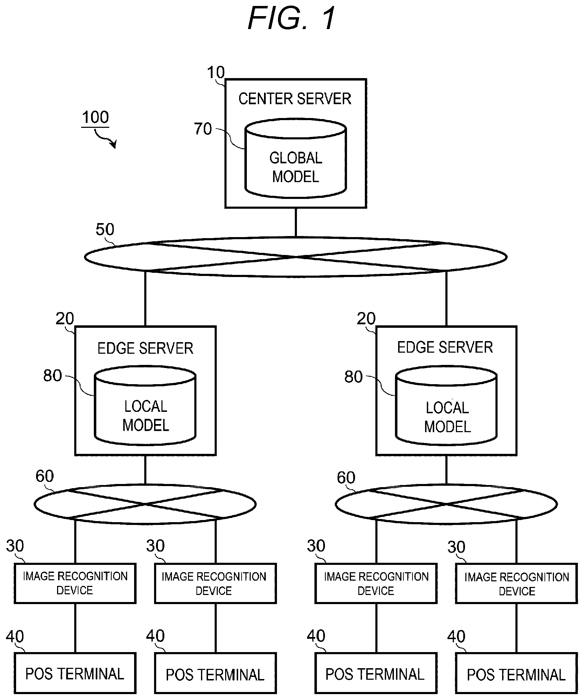

FIG. 1 is a block diagram schematically showing the configuration of an image recognition system 100 including an image recognition device 30 according to an embodiment. The image recognition system 100 includes a center server 10, an edge server 20, an image recognition device 30, a POS (point of sales) terminal 40, a first communication network 50, and a second communication network 60.

In the image recognition system 100, a plurality of edge servers 20 can be connected to one center server 10 via the first communication network 50. A plurality of image recognition devices 30 can be connected to each edge server 20 via a second communication network 60. In the image recognition system 100, each POS terminal 40 is connected to an image recognition device 30. In this example, each image recognition device 30 is connected to a POS terminal 40 on one-to-one basis. Connection between the POS terminal 40 and the respective image recognition device 30 can be by a wired or wireless communication method.

The first communication network 50 is a wide area computer network. Each second communication network 60 is a network of a narrower area than the first communication network 50. A known computer network type can be used for each of the first communication network 50 and the second communication network 60.

A set of an image recognition device 30 and a POS terminal 40 is provided at each store in the retail chain. The number of sets (each set being one image recognition device 30 paired with one POS terminal 40) provided at each store is not particularly limited. It is conceivable that only one set is provided at a store or that a plurality of sets are provided at a store.

An edge server 20 may be provided for each store or may be shared by a plurality stores in the same area or region. Alternatively, an edge server 20 may be shared by a plurality of neighboring areas. In this context, "area" may refer to a municipality, a prefecture, or a geographic region formed of neighboring prefectures, or the like.

The center server 10 is shared by all the stores of a nationwide retail chain or the like. The center server 10 may be configured to provide computer resources to each edge server 20 based on cloud computing arrangements or the like.

The center server 10 is a computer having an AI function. The center server 10 generates a global model 70 and updates the global model 70 using the AI function. The global model 70 is a learning model used to recognize an image of a commodity such as fresh food or fruit. The global model 70 is a learning model that is common to the stores of the retail chain. The global model 70 is an example of a first learning model.

Each edge server 20 is also a computer having an AI function. Each edge server 20 generates a local model 80 and updates the local model 80 using the AI function. The local model 80 is a learning model used to recognize an image of a commodity such as fresh food or fruit. The local model 80 is a learning model that is specific to a store or an area where the store is located. The local model 80 is an example of a second learning model.

Each image recognition device 30 is also a computer having an AI function. Each image recognition device 30 recognizes a commodity shown in a captured image using its AI function. Each image recognition device 30 outputs information about the recognized commodity to the corresponding POS terminal 40.

Each POS terminal 40 registers sales data of a commodity being purchased by a consumer based on information about the commodity as recognized by the corresponding image recognition device 30. Each POS terminal 40 also performs processing to settle a transaction with the consumer based on the registered sales data of the items being purchased by the consumer.

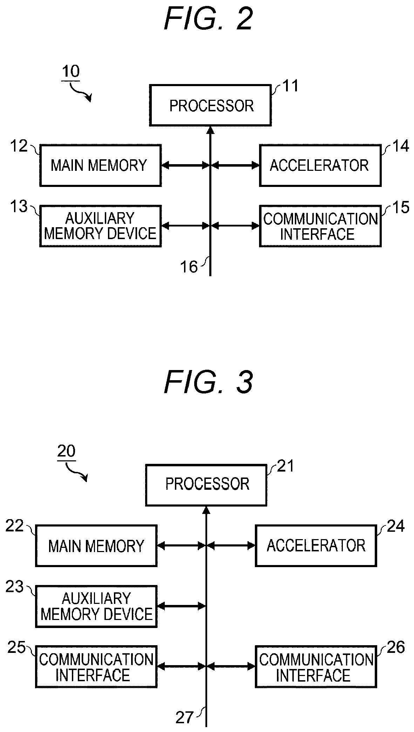

FIG. 2 is a block diagram of the center server 10. The center server 10 has a processor 11, a main memory 12, an auxiliary memory device 13, an accelerator 14, and a communication interface 15. In the center server 10, the processor 11, the main memory 12, the auxiliary memory device 13, the accelerator 14, and the communication interface 15 are connected together via a system bus 16. The system bus 16 incorporates an address bus or a data bus or the like.

The processor 11 is equivalent to a central processing part of a computer. The processor 11 implement various functions of the center server 10 according to an operating system or an application program. The processor 11 is, for example, a CPU (central processing unit).

The main memory 12 includes a non-volatile memory area and a volatile memory area. The main memory 12 stores an operating system and an application program in the non-volatile memory area. The main memory 12 stores, in the volatile memory area, data that is necessary for the processor 11 to execute control processing. The volatile memory area in the main memory 12 is also used as a work area by the processor 11 to rewrite data according to processing need. The non-volatile memory area is, for example, a ROM (read-only memory). The volatile memory area is, for example a RAM (random-access memory).

As the auxiliary memory device 13, for example, a known memory device such as an EEPROM (electrically erasable programmable read-only memory), an HDD (hard disk drive), or an SSD (solid-state drive) may be used, or a combination of a plurality of such memories may be used. In the auxiliary memory device 13, data used by the processor 11 to perform various kinds of processing and data generated by the processing of processor 11, or the like, are saved. The auxiliary memory device 13 may store an application program.

The accelerator 14 is a computational processing unit for recognizing an image by AI-based deep learning. Deep learning uses, for example, a convolutional neural network. As the accelerator 14, a GPU (graphics processing nit), an FPGA (field-programmable gate array) or the like can be used.

The communication interface 15 handles data communication with the individual edge servers 20 via the first communication network 50.

FIG. 3 is a block diagram of the edge server 20. The edge server 20 has a processor 21, a main memory 22, an auxiliary memory device 23, an accelerator 24, a first communication interface 25, and a second communication interface 26. In the edge server 20, the processor 21, the main memory 22, the auxiliary memory device 23, the accelerator 24, the first communication interface 25, and the second communication interface 26 are connected together via a system bus 27. The system bus 27 incorporates an address bus, a data bus and the like.

The processor 21, the main memory 22, the auxiliary memory device 23, and the accelerator 24 have the same basic functions as the processor 11, the main memory 12, the auxiliary memory device 13, and the accelerator 14 of the center server 10. Therefore, these components are not further described.

The first communication interface 25 handles data communication with the center server 10 via the first communication network 50.

The second communication interface 26 handles data communication with each image recognition device 30 via the second communication network 60.

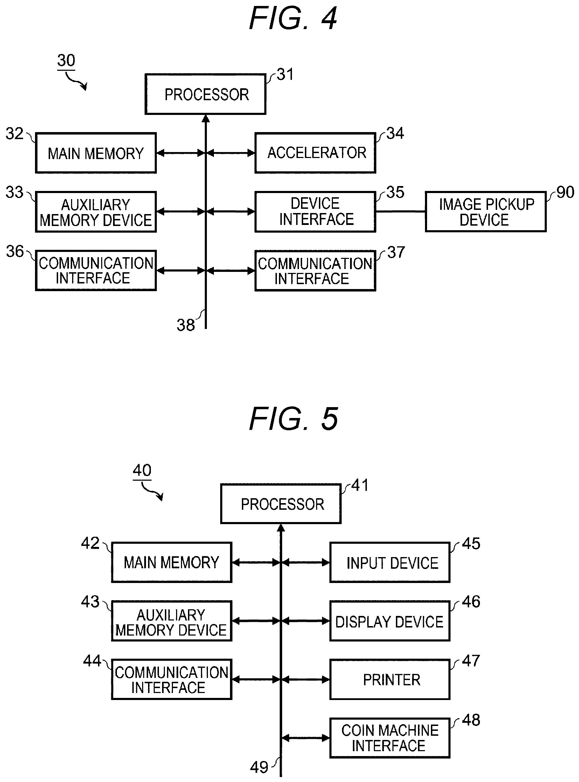

FIG. 4 is a block diagram of the image recognition device 30. The image recognition device 30 has a processor 31, a main memory 32, an auxiliary memory device 33, an accelerator 34, a device interface 35, a first communication interface 36, and a second communication interface 37. In the image recognition device 30, the processor 31, the main memory 32, the auxiliary memory device 33, the accelerator 34, the device interface 35, the first communication interface 36, and the second communication interface 37 are connected together via a system bus 38. The system bus 38 incorporates an address bus, a data bus and the like.

The processor 31, the main memory 32, the auxiliary memory device 33, and the accelerator 34 have the same basic functions as the processor 11, the main memory 12, the auxiliary memory device 13, and the accelerator 14 of the center server 10. Therefore, these components are not further described.

The device interface 35 is an interface to an image pickup device 90. The image pickup device 90 picks up or acquires an image of a commodity to be recognized. As the image pickup device 90, for example, a CCD camera using a CCD (charge-coupled device) can be used.

The first communication interface 36 handles data communication with the edge server 20 via the second communication network 60.

The second communication interface 37 handles data communication with the POS terminal(s) 40 wired or wirelessly connected thereto.

FIG. 5 is a block diagram of the POS terminal 40. The POS terminal 40 has a processor 41, a main memory 42, an auxiliary memory device 43, a communication interface 44, an input device 45, a display device 46, a printer 47, and a coin machine interface 48. In the POS terminal 40, the processor 41, the main memory 42, the auxiliary memory device 43, the communication interface 44, the input device 45, the display device 46, the printer 47, and the coin machine interface 48 are connected together via a system bus 49. The system bus 49 incorporates an address bus, a data bus and the like.

The processor 41, the main memory 42, and the auxiliary memory device 43 have the same basic functions as the processor 11, the main memory 12, and the auxiliary memory device 13 of the center server 10. Therefore, these components are not further described.

The communication interface 44 handles data communication to and from the image recognition device 30 wired or wirelessly connected thereto. The communication interface 44 also handles data communication with other computer devices such as a store server.

The input device 45 is used to input necessary data to the POS terminal 40. The input device 45 is, for example, a keyboard, a touch panel sensor, a card reader, a barcode scanner or the like.

The display device 46 is for displaying information to be presented to an operator (e.g., a sales clerk) or a consumer (e.g., store customer). The display device 46 is, for example, a liquid crystal display, an organic EL (electroluminescence) display or the like.

The printer 47 is a printer for printing a receipt.

The coin machine interface 48 handles data communication to and from an automatic coin machine.

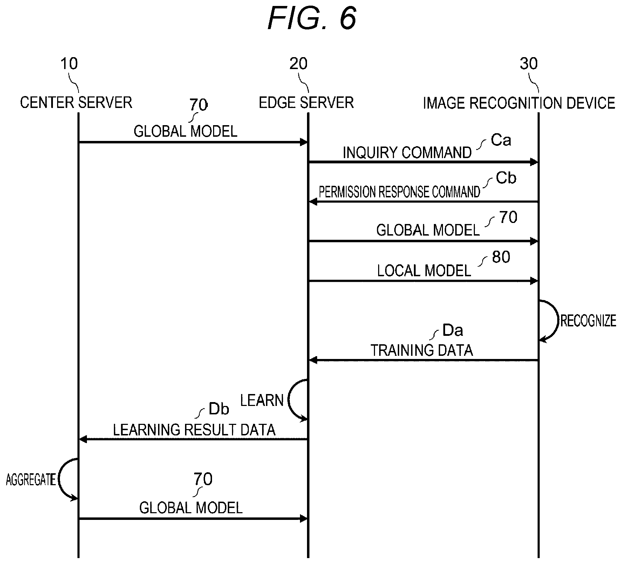

FIG. 6 is a sequence chart of main data signals transferred between the center server 10, an edge server 20, and an image recognition device 30. It is assumed in this context that the center server 10 and each edge server 20 have already developed and incorporate a global model 70 and a local model 80, respectively.

First, the center server 10 distributes the global model 70 to each edge server 20 via the first communication network 50 at any arbitrary time. For convenience, this distribution time may be referred to as a learning model distribution time.

Upon receiving the global model 70 from the center server 10, each edge server 20 stores the global model 70 into the auxiliary memory device 23. Each edge server 20 then outputs an inquiry command Ca to inquire whether the image recognition devices 30 are ready to receive a learning model or not. The inquiry command CA is sent to each image recognition device 30 connected to the respective edge server 20 via the second communication network 60. That is, an inquiry command Ca is transmitted to each image recognition device 30 via the second communication network 60.

If ready to receive a learning model, the image recognition device 30 outputs a permission response command Cb to the edge server 20. The permission response command Cb is transmitted to the edge server 20 via the second communication network 60.

On receiving the permission response command Cb, the edge server 20 transmits the global model 70 and the local model 80 via the second communication network 60 to the image recognition device 30 sending the permission response command Cb.

On receiving the global model 70 and the local model 80 from the edge server 20, the image recognition device 30 stores the global model 70 and the local model 80 into the auxiliary memory device 33. By storing the global model 70 and the local model 80, the image recognition device 30 is enabled to perform image recognition of a commodity.

The image recognition device 30, thus enabled to perform image recognition, executes image recognition processing as necessary. The image recognition device 30 then outputs training data Da acquired by the image recognition processing to the edge server 20. The training data Da is transmitted to the edge server 20 via the second communication network 60.

The edge server 20 performs additional learning for the local model 80 based on the training data Da that has been transmitted from any of the image recognition device 30 via the second communication network 60. The edge server 20 subsequently outputs learning result data Db, which is the result of the additional learning by the local model 80, to the center server 10. The learning result data Db is transmitted to the center server 10 via the first communication network 50.

The center server 10 updates the global model 70 in such a way as to aggregate the learning result data Db transmitted from each edge server 20 connected to the central server 10 via the first communication network 50. The center server 10 distributes the global model 70 as updated by the aggregation of the learning result data Db to each edge server 20 via the first communication network 50 at some arbitrary timing. Subsequently, the center server 10, edge servers 20, and image recognition devices 30 repeat operations similar to the above after additional image recognition processing is performed by image recognition devices 30.

Thus, a local model 80 provided in each edge server 20 can be updated by additional learning based on the result of image recognition by one or a plurality of image recognition devices 30 connected to the edge server 20. Additionally, the global model 70 provided in the center server 10 is updated in such a way that the result of learning for each local model 80 by each edge server 20 is aggregated.

The image recognition processing executed by an image recognition device 30 will now be described.

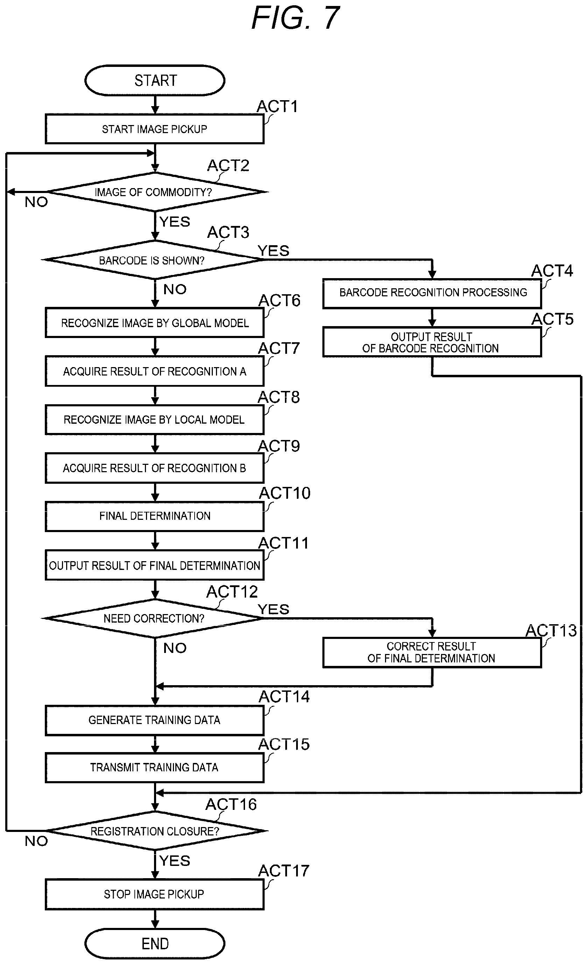

FIG. 7 is a flowchart of the image recognition processing executed by the processor 31 of the image recognition device 30. The processor 31 executes the image recognition processing based on the procedures shown in the flowchart of FIG. 7, according to a control program installed in the main memory 32 or the auxiliary memory device 33.

The installation of the control program in the main memory 32 or the auxiliary memory device 33 is not limited to any particular method. The control program can be recorded in a non-transitory removable recording medium or distributed over a communication network. The recording medium may come in any form that can store the program and is readable by the device, such as a CD-ROM or a memory card.

On receiving a request for payment from a consumer for a commodity to be purchased, the operator of the POS terminal 40 operates the input device 45 to declare the start of registration. In response to this declaration, a startup signal is output from the POS terminal 40 to the image recognition device 30. In response to this startup signal, the processor 31 of the image recognition device 30 starts the information processing according to the procedures shown in the flowchart of FIG. 7.

First, in ACT 1, the processor 31 activates the image pickup device 90 to start image acquisition. In ACT 2, the processor 31 waits for captured image data of a commodity.

In general, the operator (e.g., a sales clerk or the customer) manually picks up the commodities to be purchased, one by one, and holds each commodity up to the lens of the image pickup device 90. Thus, the image pickup device 90 captures an image of each commodity.

The processor 31 performs contour extraction processing or the like on captured image data inputted via the device interface 35 and determines whether an image of a commodity has been captured or not. If the image of the commodity is captured, YES in ACT 2, the processor 31 proceeds to ACT 3. In ACT 3, the processor 31 analyzes the captured image data and checks whether a barcode is shown in the captured image or not. If the barcode is shown in the captured image, YES in ACT 3, the processor 31 proceeds to ACT 4. In ACT 4, the processor 31 executes known barcode recognition processing to read a code in the form of a barcode from the image of the barcode. In ACT 5, the processor 31 outputs the code obtained from the barcode to the POS terminal 40. Subsequently, the processor 31 proceeds to ACT 16.

However, if a barcode is not depicted in the captured image, NO in ACT 3, the processor 31 proceeds to ACT 6. In ACT 6, the processor 31 activates the accelerator 34. The processor 31 gives the accelerator 34 a command to execute a machine learning algorithm using the global model 70. In response to this command, the accelerator 34 inputs the image data of the captured image into the global model 70 (which has been previously stored in the auxiliary memory device 33), executes deep learning, for example, using a convolutional neural network, and attempts to recognize the commodity shown in the captured image.

In ACT 7, the processor 31 acquires a result of "recognition A" (global model recognition result) from the accelerator 34. The result of recognition A can be a list of commodity items that are determined as having feature data with a similarity equal to or higher than a predetermined threshold to feature data modelled by the global model 70. The list of commodity items can be a list subdivided into varieties of a commodity type.

Next, in ACT 8, the processor 31 gives the accelerator 34 a command to execute a machine learning algorithm using the local model 80. In response to this command, the accelerator 34 inputs the image data of the captured image into the local model 80 (which has been previously stored in the auxiliary memory device 33), executes deep learning, for example, using a convolutional neural network, and attempts to recognize the commodity shown in the captured image.

In ACT 9, the processor 31 acquires a result of "recognition B" (local model recognition result) from the accelerator 34. The result of recognition B can be a list of commodity items that are determined as having feature data with a similarity equal to or higher than a predetermined threshold to feature data modelled by the local model 80. The list of commodity items can be a list subdivided into varieties of a commodity type.

In ACT 10, the processor 31 makes a final determination of commodity identity based on recognition A and recognition B. For example, the processor 31 performs a predetermined weighting on the similarity of the commodity items acquired as the result of recognition B. The processor 31 then compares the weighted similarity of the commodity items acquired as the result of recognition B with the similarity of the commodity items acquired as the result of recognition A. The processor 31 selects, for example, commodity items with the first to third highest similarities to be candidate commodities.

In this way, if the similarity acquired as the result of recognition A and the similarity acquired as the result of recognition B are substantially equal, the similarity acquired as the result of recognition B is higher due to the weighting. Therefore, the result of recognition B can be given priority over the result of recognition A.

In ACT 11, the processor 31 outputs the result of the final determination to the POS terminal 40. Thus, a list of the candidate commodities in the first to third places acquired as the result of the final determination is displayed on the display device 46 of the POS terminal 40.

The operator of the POS terminal 40 checks whether the commodity that was held up to the image pickup device 90, that is, the commodity to be purchased by the consumer, is included in the list of the candidate commodities or not. If the commodity is included in the list, the operator performs an operation to select this particular commodity. By this operation, sales data of the commodity to be purchased is registered in the POS terminal 40. If the commodity is not included in the list of the candidate commodities, the operator operates the input device 45 to manually register sales data of the commodity to be purchased.

After outputting the result of the final determination, the processor 31, in ACT 12, checks whether the result of the final determination needs correction. If the candidate commodity in the second place or below is selected at the POS terminal 40, the result of the final determination is considered to need a correction, YES in ACT 12, and the processor 31 thus proceeds to ACT 13. In ACT 13, the processor 31 corrects the result of the final determination. Specifically, the processor 31 makes a correction such that the actually selected candidate commodity will be put in the first place. Subsequently, the processor 31 proceeds to ACT 14.

However, if the result of the final determination needs no correction (NO in ACT 12), that is, if the candidate commodity in the first place was selected, the processor 31 proceeds to ACT 14.

In ACT 14, the processor 31 generates training data Da. The training data Da is data formed by attaching a correct answer label to the captured image of the commodity inputted via the device interface 35. The correct answer label is information that identifies the candidate commodity determined as the first place in the result of the final determination. That is, if the result of the final determination needs no correction, the correct answer label is information about the commodity that is set to the first place by the final determination. If the result of the final determination needs a correction, the correct answer label is data of the commodity changed to the first place by that correction.

In ACT 15, the processor 31 gives a command to transmit the training data Da. In response to this command, the training data Da is transmitted from the image recognition device 30 to the edge server 20, as shown in FIG. 6.

After transmitting the training data Da, the processor 31, in ACT 16, checks whether a registration closure is declared or not. If registration closure is not yet declared, the processor 31 returns to ACT 2. The processor 31 executes the processing from ACT 2 as described above.

Thus, every time the operator holds a commodity up to the lens of the image pickup device 90, processing similar to the processing of ACT 2 to ACT 16 is executed. On completion of the registration of all the commodities to be purchased by the consumer, the operator operates the input device 45 to declare a registration closure.

If it is detected that a registration closure is declared in the POS terminal 40, YES in ACT 16, the processor 31 proceeds to ACT 17. In ACT 17, the processor 31 stops the image pickup device 90 from performing image acquisition. Then, the processor 31 ends the information processing shown in the flowchart of FIG. 7.

The processor 31 executes the processing of ACT 6 and ACT 7 in cooperation with the accelerator 34 and thus can be considered to form a first recognition unit. That is, the processor 31 takes in a captured image of a commodity as an input and recognizes the commodity by deep learning (in conjunction with the accelerator 34) using the common global model 70, which is managed by the center server 10.

The processor 31 also executes the processing of ACT 8 and ACT 9 in cooperation with the accelerator 34 and thus can be considered to form a second recognition unit. That is, the processor 31 takes in the captured image of the commodity as an input and recognizes the commodity by deep learning (in conjunction with the accelerator 34) using the specific local model 80, which is managed by the edge server 20.

The processor 31 executes the processing of ACT 10 and thus can be considered to form an identification unit. That is, the processor 31 identifies the commodity shown in the captured image, based on a recognition by deep learning using the global model 70 and a recognition by deep learning using the local model 80. At this point, the processor 31 identifies the commodity by weighting and giving priority to the result of recognition B (using the local model 80) over the result of recognition A (using the global model 70).

The processor 31 executes the processing of ACT 12 and thus can be considered to form a determination unit. That is, the processor 31 determines whether the commodity that was identified by the identification unit was correct or incorrect.

The processor 31 executes the processing of ACT 13 to ACT 15 and thus can be considered to form a transmission unit. That is, if the determination unit determines that the answer (identification) was correct, the processor 31 transmits training data Da in which a correct answer label is attached to the commodity that was identified by the identification unit to the edge server 20. If the determination unit determines that it is the answer (identification) was wrong, the processor 31 transmits training data Da in which a correct answer label is attached to a corrected commodity to the edge server 20.

The processor 31 executes the processing of ACT 11 in cooperation with the second communication interface 37 and thus can be considered to form an output unit. That is, the processor 31 outputs information about the commodity identified by the identification unit to the POS terminal 40. The determination unit determines whether the commodity identification is correct or wrong based on the information from the POS terminal 40 acquired in the processing of ACT 12.

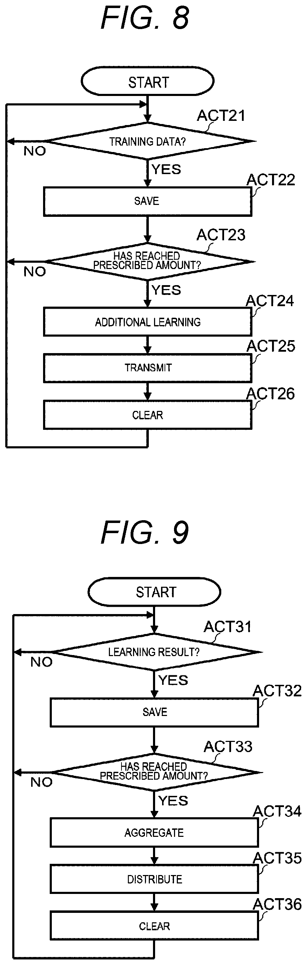

The processor 21 of the edge server 20 receives training data Da from each image recognition device 30 connected via the second communication network 60 and is programmed to execute information processing based on procedures shown in the flowchart of FIG. 8. That is, in ACT 21, the processor 21 waits for training data Da. If the processor 21 has received training data Da, YES in ACT 21, the processor 21 proceeds to ACT 22. In ACT 22, the processor 21 saves the training data Da in the auxiliary memory device 23.

In ACT 23, the processor 21 checks whether the number of data of the training data Da saved in the auxiliary memory device 23 has reached some prescribed amount. The prescribed amount can be any value greater than two. The prescribed amount is, for example, one hundred. If the number of data of the training data Da has not reached the prescribed amount, NO in ACT 23, the processor 21 returns to ACT 21. The processor 21 waits for the next training data Da.

If the training data Da has reached the prescribed amount, YES in ACT 23, the processor 21 proceeds to ACT 24. In ACT 24, the processor 21 activates the accelerator 24. The processor 21 gives the accelerator 24 a command to perform additional learning for the local model 80 with the prescribed amount of the training data Da. In response to this command, the accelerator 24 extracts feature data from image data in the training data Da, forms the feature data into a model as the feature data of the commodity with the correct answer label, and adds this model to the local model 80.

On completion of the additional learning by the accelerator 24, the processor 21, in ACT 25, outputs learning result data Db, which is the result of the additional learning, to the center server 10. The learning result data Db is the data of the local model 80 as updated by the additional learning. On completion of the output of the learning result data Db, the processor 21, in ACT 26, deletes the training data Da of the prescribed amount that was saved in the auxiliary memory device 23. The processor 21 then returns to ACT 21.

Subsequently, the processor 21 saves training data Da received from each image recognition device 30, and every time the training data Da reaches the prescribed amount, the processor 21 repeats the processing of the addition learning for the local model 80, the transmission of learning result data Db, and the deletion of the training data Da.

The processor 11 of the center server 10 receives training data Da from each edge server 20 connected via the first communication network 50 and is programmed to execute information processing based on procedures shown in the flowchart of FIG. 9. That is, in ACT 31, the processor 11 waits for learning result data Db. If the processor 11 has received learning result data Db, YES in ACT 31, the processor 11 proceeds to ACT 32. In ACT 32, the processor 11 saves the learning result data Db in the auxiliary memory device 13.

In ACT 33, the processor 11 checks whether the number of data of the learning result data Db saved in the auxiliary memory device 13 has reached some prescribed amount. The prescribed amount can be any value greater than two. In this context, the prescribed amount is, for example, five. If the learning result data Db has not reached the prescribed amount, NO in ACT 33, the processor 11 returns to ACT 31. The processor 11 waits for the next learning result data Db.

If the learning result data Db has reached the prescribed amount, YES in ACT 33, the processor 11 proceeds to ACT 34. In ACT 34, the processor 11 activates the accelerator 14. The processor 11 gives the accelerator 14 a command to aggregate the learning result data Db into the global model 70. In response to this command, the accelerator 14 updates the global model 70 in such a way that the data of the local model 80, which is the learning result data Db, is aggregated into the global model 70.

On completion of the aggregation of the learning result data Db by the accelerator 14, the processor 11, in ACT 35, distributes the global model 70 as updated by the aggregation of the learning result data Db to each edge server 20. In ACT 36, the processor 11 deletes the learning result data Db that was saved in the auxiliary memory device 13. The processor 11 then returns to ACT 31.

In this way, at each edge server 20, additional learning for the local model 80 is performed with training data Da acquired as the result of recognition by each image recognition device 30 connected via the second communication network 60. Each image recognition device 30 connected via the second communication network 60 can be installed at the same store or at different stores in the same area. Therefore, it can be said that the local model 80 is an area-specific learning model.

At the center server 10, the local model 80 of each edge server 20 connected via the first communication network 50 is aggregated to update the global model 70. Therefore, it can be said that the global model 70 is a nationwide common learning model.

To each image recognition device 30, the global model 70 managed by the center server 10 and the local model 80 managed by an edge server 20 connected to the image recognition device 30 via the second communication network 60 are distributed.

The image recognition device 30 recognizes a commodity from a captured image inputted via the device interface 35 by deep learning using the global model 70. The image recognition device 30 also recognizes the commodity from the same captured image by deep learning using the local model 80. Each image recognition device 30 then identifies the commodity shown in the captured image based on the result of recognition A of the commodity by deep learning using the global model 70 and the result of the recognition B of the commodity by deep learning using the local model 80.

Thus, according to this example embodiment, a commodity can be recognized not only by deep learning using a nationwide common learning model, such as the global model 70, but also by deep learning using an area-specific learning model, such as the local model 80. Therefore, even a commodities having only small differences in feature data when shown in a captured image can be accurately recognized.

Also, the result of recognition B of a commodity by deep learning using the local model 80 can be weighted differently than the result of recognition A of the commodity by deep learning using the global model 70. In the example, the result of recognition B is given priority over the result of recognition A in the identification of the commodity. Therefore, in a particular area, even if there is only a very small difference in feature data between a commodity sold exclusively in this area and a commodity sold exclusively in another area, the commodity sold exclusively in the particular area will be preferentially identified. This further improves accuracy.

Certain example embodiments of an image recognition device has been described. However, these example embodiments are not limiting.

The image recognition using the global model 70 is performed in ACT 6 (in FIG. 7) and subsequently the image recognition using the local model 80 is performed in ACT 8. However, in other examples, the image recognition using the local model 80 may be performed first and the image recognition using the global model 70 may be performed later.

In an embodiment, a case where the image recognition device 30 performs image recognition by deep learning using a convolutional neural network is described. However, the algorithm used for image recognition is not limited to a convolutional neural network. The image recognition device 30 may perform image recognition using the global model 70 and the local model 80 by deep learning using any other image recognition algorithm.

In an embodiment, a case where the image recognition device 30 weights the similarity of feature data acquired as the result of recognition and gives priority to the result of recognition using the local model 80 over the result of recognition using the global model 70 is described. However, the target of weighting is not limited to similarity. Another index other than the similarity may be weighted to give priority to the result of recognition using the local model 80.

In an embodiment, the image recognition device 30 is used for recognizing a commodity with no barcode such as fresh food or fruit is described as an example. However, the use of the image recognition device is not limited to commodities with no barcode such as fresh food or fruit. The image recognition device can be applied to a whole range of products or items that might be available nationwide and/or as variants available only in specific areas.

While some embodiments have been described, these embodiments are presented simply as examples and are not intended to limit the scope of the disclosure. These novel embodiments can be carried out in various other forms and can include various omissions, replacements, and modifications without departing from the scope of the disclosure. These embodiments and the modifications thereof are included in the scope of the disclosure and also included in the scope of the claims and equivalents thereof.

## Claims

1. An image recognition device, comprising:
a first communication interface configured to connect to a server device;
a second communication interface configured to connect to a point-of-sale terminal;
a first recognition unit configured to receive a captured image of a commodity and use a first learning model to recognize the commodity in the captured image by deep learning;
a second recognition unit configured to receive the captured image of the commodity and use a second learning model to recognize the commodity in the captured image by deep learning; and
a processor configured to identify the commodity in the captured image according to recognition results from the first recognition unit and the second recognition unit.

2. The image recognition device according to claim 1, wherein
the processor is configured to apply a weighting factor to the recognition result from the first recognition unit which is different from a weighting factor to the recognition result from the second recognition unit to identify the commodity, and
the recognition result from the second recognition unit is weighted more heavily than the recognition result from the first recognition unit.

3. The image recognition device according to claim 1 or 2, wherein the processor is further configured to:
output information, via the second communication interface, indicating the identification of the commodity to the point-of-sale terminal; and
receive, via the second communication interface, an indication from the point-of-sale terminal indicating whether the identification of the commodity was correct or not.

4. The image recognition device according to claim 3, wherein the processor is further configured to:
determine whether the commodity was correctly identified or not based on the indication from the point-of-sale terminal received via the second communication interface.

5. The image recognition device according to claim 4, wherein the processor is further configured to transmit training data to the server via the first communication interface, the training data including the captured image and a correct answer label attached to a correctly identified commodity.

6. The image recognition device according to any one of claims 1 to 5, wherein
the first learning model is based on data from a plurality of image recognition devices, and
the second learning model is based on data from a subset of the plurality of image recognition devices.

7. The image recognition device according to any one of claims 1 to 6, further comprising:
an accelerator, which is a computational processing unit for recognizing images by artificial intelligence (AI)-based deep learning, wherein
the first recognition unit comprises the processor and the accelerator, and
the second recognition unit also comprises the processor and the accelerator.

8. A product recognition system for retail chain stores, the product recognition system comprising:
a central server;
a plurality of edge servers connected to the central server by a first communication network, each edge server being respectively connected to a plurality of image recognition devices by a second communication network; and
a plurality of point-of-sale terminals, each point-of-sale terminal being respectively connected to the image recognition device according to any one of claims 1 to 7.

9. The product recognition system according to claim 8, wherein
the center server manages the first learning model, and
each edge server manages a separate version of the second learning model.

10. A non-transitory computer-readable storage device storing program instruction which when executed by an image recognition device including an interface that acquires a captured image of a commodity for purchase causes the image recognition device to perform an image recognition method comprising:
acquiring an image of a commodity via the interface;
recognizing the commodity in the image by deep learning using a first learning model;
recognizing the commodity in the image by deep learning using a second learning model; and
identifying the commodity in the image according to recognition results by the first learning model and the second learning model.

11. The non-transitory computer-readable storage device according to claim 10, wherein the recognition result by the second learning model is weighted more heavily than the recognition result by the first learning model.

12. The non-transitory computer-readable storage device according to claim 10 or 11, wherein
the first learning model is based on data from a plurality of image recognition devices, and
the second learning model is based on data from a subset of the plurality of image recognition devices.
